# EUROPÄISCHE PATENTSCHRIFT

(11) **EP 0 473 022 B1**
(45) Veröffentlichungstag und Bekanntmachung des Hinweises auf die Patenterteilung: **18.01.1995**
(21) Anmeldenummer: 91113721.4
(22) Anmeldetag: 16.08.1991
(51) Int. Cl.: C04B 35/00

(54) **Vergiessbare und sinterfähige, Pulver enthaltende Formmasse**
Sinterable powders containing, castable moulding material
Matériau de moulage coulable contenant des poudres frittables

(30) Priorität: 25.08.1990 DE 4026965
(43) Veröffentlichungstag der Anmeldung: 04.03.1992
(73) Patentinhaber: BASF Aktiengesellschaft, 67063 Ludwigshafen (DE)
(72) Erfinder: Ter Maat, Johan Herman Hendrik, W-6800 Mannheim 1 (DE); Oppenlaender, Knut, Dr., W-6700 Ludwigshafen (DE); Sterzel, Hans-Josef, Dr., W-6701 Dannstadt-Schauernheim (DE)

(56) Entgegenhaltungen:
- EP-A- 0 353 523
- EP-A- 0 369 045
- DE-A- 3 630 690
- DE-A- 3 926 019
- CHEMICAL ABSTRACTS, vol. 110, no. 7, 3. April 1989, Columbus, Ohio, US; abstract No. 120023w,seite 340 & JP-A-63151659

## Beschreibung

Für die Formgebung von gesinterten Körpern aus Pulvern kann man auf drei Verfahren zurückgreifen. Am einfachsten ist das Verfahren des Pressens, sei es axial oder isostatisch. Pressen ist ein kostengünstiges Formgebungsverfahren. Üblicherweise mahlt man das Pulver(gemisch) naß, versetzt mit wenigen Prozentsätzen eines organischen Preßhilfsmittels; danach wird über Sprühtrocknung ein Granulat gefertigt, das bei einem Druck von 100 - 6 000 bar verpreßt wird. Nachteile des Axialpressens sind Verschleiß der Preßstempel und die Beschränkung auf einfache Geometrien mit relativ bescheidenen Dimensionen (einige cm); schwerwiegend sind die auftretenden Dichteschwankungen im Grünkörper, die von der Wandreibung verursacht werden. Diese Schwankungen führen während des Sinterns zu unterschiedlichen Verdichtungsgeschwindigkeiten und damit zu Spannungsaufbau, Rißbildung und Verzug im gesinterten Formkörper.

Das kaltisostatische Pressen bietet eine wesentlich bessere Homogenität im gepreßten Körper und ist außerdem etwas flexibler in seinen Formgebungsmöglichkeiten. Eine Nachbearbeitung im grünen oder im gesinterten Zustand ist jedoch immer erforderlich. Komplizierte Formen sind nicht möglich. Für die anspruchsvolleren Aufgaben der Formgebung sind Schlickerguß und Spritzguß die bewährten Verfahren.

Beim Schlickerguß werden die Pulver zunächst mit einem Dispergierhilfsmittel in einem Lösungsmittel (üblicherweise Wasser) gemahlen. Die erhaltene Suspension wird in einer porösen Form entwässert, wobei sich an der porösen Wand der Scherben bildet. Die Scherbenbildung kann mittels Druckbeaufschlagung beschleunigt werden. Schlickerguß wird jedoch bei größeren Wandstärken unpraktikabel durch die langen Filtrierzeiten. Die großen Vorteile des Schlickergußverfahrens sind die homogene und hohe Dichte des Grünkörpers (55 bis 65 Vol.%) und die Möglichkeit, komplexe und große Formteile herzustellen. Besonders geeignet ist der Schlickerguß für die Herstellung von Hohlteilen; bei keramischen Vollkörpern bildet sich aber bei allseitiger Entwässerung in der Mitte eine Zone von niedriger Dichte. Die Formtrennung ist oftmals schwierig und, bedingt durch die Rauhigkeit der porösen Oberfläche, die Oberflächengüte des Formlings schlecht, was eine teure Nachbearbeitung erforderlich macht.

Diese Probleme im Schlickerguß lassen sich unter Verwendung einer feinporigen Membran auf der porösen Oberfläche teilweise lösen (siehe z.B. DE-OS 3 741 002). Hier wird eine Membran in die poröse Form eingelegt und hiermit die Formtrennung und Oberflächenqualität verbessert. Die Membran muß jedoch bei jedem Guß erneuert werden, was unpraktikabel ist. Permanent in der Form angebrachte Membranen erreichen nur niedrige Abformzahlen und können zur Reinigung nicht wie üblich rückgespült werden.

Beim Spritzguß vermischt man das Pulver mit einem thermoplastischen Polymer zu einem hochgefüllten Granulat (50-60 Vol.-% Pulver). Das Granulat wird bei der Verarbeitung in einer Schneckenspritzgußmaschine wieder aufgeschmolzen und bei 10-1 000 bar in eine temperierte Form eingespritzt. Das erstarrte Formteil muß vor dem Sintern zunächst entbindert werden. Normalerweise wird das mit einer Kombination aus Verdampfung und Pyrolyse ausgeführt; die Entfernung des Binders muß sehr vorsichtig vorgenommen werden, um Rißbildung zu vermeiden. Für die Austreibung des Binders muß das Grünteil wieder oberhalb des Erweichungspunktes des Thermoplasten aufgeheizt werden; hierbei kann es leicht zu einer gravitationsbedingten Verformung kommen. Diese Verformung und der anisotrope Schrumpf machen eine Nachbearbeitung des gesinterten Teiles, trotz der guten Oberflächenqualität, unausweichlich.

Aus den beschriebenen Gründen hat der konventionelle Spritzguß zwar die Vorteile einer kurzen Taktzeit und eine gute Oberflächenqualität, die Wirtschaftlichkeit leidet aber unter der langen und schwierigen Entbinderung. Es gibt im Spritzguß auch alternative Verfahren, die als plastische Phase im Grunde eine Lösung von einem hochmolekularen Polymer in einem Lösungsmittel aufweisen. Ein Beispiel ist in der US-PS 4 113 480 beschrieben. Bei einem Verfahren zur Herstellung von Pulvermetallformteilen wird eine 20-50 %ige Lösung von Methylcellulose in Wasser verwendet. Die Verfestigung erfolgt durch Einspritzen in eine beheizte Form; bei höherer Temperatur fällt Methylcellulose aus und bildet ein Gel. Die Gelfestigkeit ist jedoch unbefriedigend; außerdem ist die Polymerlösung relativ viskos, so daß ähnliche Probleme wie bei den Thermoplasten auftreten. Eine weitere Variante ist in der DE-OS 36 30 690 beschrieben, bei der ein Thermoplast bei der Verarbeitungstemperatur in einem Mineralöl gelöst ist; die Verfestigung wird durch Abkühlung herbeigeführt. Das geformte Teil muß für die Entbinderung jedoch eingebettet werden, denn bei den Temperaturen, die für die Verdampfung des Mineralöls notwendig sind, ist der Binder schon wieder fließfähig.

Aus DE-A-39 26 019 ist ein Verfahren zur Herstellung von dünnwandigen keramischen Kleinstteilen durch Niederdruck-Warm-Spritzgießen bekannt, wobei das unplastische keramische Pulver mit einem Paraffin-Bindemittelgemisch zum Spritzgießen vorbereitet wird. Das Verfahren wird ohne Lösungsmittel durchgeführt.

Die EP-A-369 045 beschreibt Oxyalkyleneinheiten - aufweisende Stickstoffhaltige Dispergiermittel ohne lange Alkylreste.

Der vorliegenden Erfindung lag daher die Aufgabe zugrunde, versinterbare Pulver enthaltende Formmassen bereitzustellen, die einen hohen Füllgrad an versinterbaren Pulvern enthalten, die sich leicht zu Grünkörpern verformen lassen, aus denen das Formhilfsmittel vor der Versinterung ohne Verformung und Rißbildung entfernt werden kann und die dann zu Formteilen versintert werden können, die eine glatte Oberfläche und eine hohe Maßhaltigkeit aufweisen, die weder äußerlich noch in ihrem Inneren Fehler, wie Inhomogenitäten, aufweisen.

Es wurde gefunden, daß diese Aufgabe dadurch gelöst werden kann, daß die vergießbare, versinterbare Pulver enthaltende Formmasse, bezogen auf die Gesamtmasse
a) 60 bis 97 Gew.-% versinterbare Pulver,
b) 0,1 bis 10 Gew.-% von durch Alkoxylierung von aliphatischen Alkoholen, Fettsäuren, Fettsäureamiden oder aliphatischen Aminen erhältliche Tenside der allgemeinen Formeln 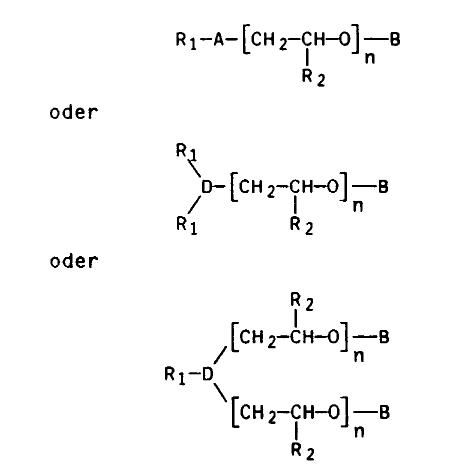 in denen R₁ ein aliphatischer Kohlenwasserstoffrest mit 10 bis 40 C-Atomen,
   A die Gruppierung
   -O- oder 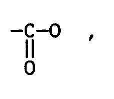 R₂, -H, -CH₃ und/oder -CH₂·CH₃,
   B die Gruppierung
   -HSO₃ , -H₂PO₄ , 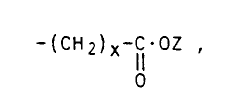 -(CH₂)ₓ-NH₂ , -NH-(CH₂)ₓ-NH₂ oder 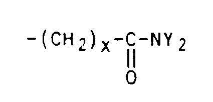 in der Z für Wasserstoff, Alkalimetall oder Ammonium,
   x für eine ganze Zahl von 1 bis 3 und Y für H oder -CH₃ steht,
   D die Gruppierung
   〉N- oder 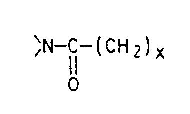 in der x ebenfalls die obige Bedeutung hat und
   n eine eine ganze Zahl von 1 bis 40 ist, bedeutet, und
c) 2 bis 35 Gew.-% eines organischen Lösungsmittels mit einem Schmelzpunkt < 10°C und einem Siedepunkt von 40 bis 180°C, ausgewählt aus der Gruppe der Alkane, Ether, Ester und Ketone,
enthält.

Die erfindungsgemäßen Formmassen haben die Eigenschaft, daß sie eine Verfestigungstemperatur im Bereich von -20 bis 35°C haben. Dies bedeutet, daß sie oberhalb dieser Temperatur fließfähig sind und unterhalb dieser Temperatur rasch, vollständig und reversibel verfestigt werden.

Damit ist es möglich, die mit sinterbaren Pulvern hoch gefüllten Massen oberhalb ihrer Verfestigungstemperatur durch Gießen, z.B. Spritzgießen zu verformen. Nach dem Abkühlen wird aus dem verfestigten Formkörper das Lösungsmittel, z.B. durch Vakuumtrocknung, das zurückbleibende Tensid z.B. durch Pyrolyse entfernt. Der so erhaltene Weißkörper kann dann auf herkömmliche Weise versintert werden.

Die erfindungsgemäßen Formmassen enthalten 60 bis 97 Gew.-%, vorzugsweise 80 bis 95 Gew.-% versinterbare Pulver. Unter versinterbaren Pulvern werden oxidische Keramikpulver, z.B. Al₂O₃, ZrO₂, Y₂O₃, BaTiO₃, Aluminiumilikate oder auch nichtoxidische Keramikpulver wie SiC, Si₃N₄, WC sowie Metallpulver wie Fe, Si mit Korngrößen von 0,1 bis 50 µm verstanden. Selbstverständlich können auch Mischungen dieser Substanzen eingesetzt werden.

Vom Tensid werden 0,1 bis 10 Gew.-%, vorzugsweise 0,5 bis 5 Gew.-% verwendet. Selbstverständlich können auch Gemische von Tensiden eingesetzt werden. Der optimale Wert ergibt sich als Kompromiß zwischen der Dispergierbarkeit und dem Wunsch, so wenig wie möglich Rückstand an Tensid im getrockneten Formteil ausbrennen zu müssen.

Bei dem in den erfindungsgemäßen Formmassen enthaltenen Tensid handelt es sich um solche, die durch Alkoxylierung, d.h. durch Anlagerung von Ethylenoxid, Propylenoxid und/oder Butylenoxiden an Verbindungen mit aktivem Wasserstoff erhältlich sind. Bei diesen Verbindungen handelt es sich um Fettalkohole, Fettsäuren bzw. deren Ester und Amide sowie um primäre und sekundäre aliphatische Amine, mit jeweils, vorzugsweise unverzweigten und gesättigten Kohlenwasserstoffresten von 10 bis 40 C-Atomen, vorzugsweise 16 bis 22 C-Atomen. Mit steigender Kettenlänge steigt die Verfestigungstemperatur der erfindungsgemäßen Formmassen, während umgekehrt die Dispergierbarkeit abnimmt.

Der mittlere Alkoxylierungsgrad sollte, ausgedrückt durch n mindestens 1 betragen, um die Dispergierbarkeit des versinterbaren Pulvers im Lösungsmittel zu gewährleisten. Die obere Grenze für den Alkoxylierungsgrad ist gegeben durch die geforderte Löslichkeit des Tensids im Lösungsmittel, die u.a. auch von der Länge des Kohlenwasserstoffrestes R₁ abhängt. Im allgemeinen liegt der Alkoxylierungsgrad nicht über 40. Mit zunehmendem Alkoxylierungsgrad nimmt die Verfestigungstemperatur der erfindungsgemäßen Formmassen zu und kann in den verfahrenstechnisch wünschenswerten Bereich von 15 bis 35°C kommen, während die Dispergierbarkeit abnimmt.

Die Lösungsmittel oder deren Gemische, werden vorzugsweise in einer Menge von 3 bis 15 Gew.% eingesetzt. Sie sollen einen Schmelzpunkt unter 10°C und einen Siedepunkt von 40 bis 180°C, vorzugsweise von 60 bis 130°C aufweisen. Als Lösungsmittel kommen Alkane, Ether, Ester und Ketone in Betracht. Bevorzugt sind aus dieser Gruppe Lösungsmittel, die eine geringe Polarität aufweisen. Beispiele bevorzugter Lösungsmittel sind n-Octan und Diisopropylether. Als Lösungsmittel wird ein solches gewählt, dessen Schmelzpunkt unter der Verfestigungstemperatur der jeweiligen Formmasse liegt. Außerdem soll es noch ausreichend flüchtig sein, um eine Vakuumtrocknung zu erlauben. Andererseits darf das Lösungsmittel bei der Verarbeitung noch nicht so schnell verdampfen, daß eine zu schnelle Eindickung oder Verkrustung auftritt.

Es ist zweckmäßig, daß die erfindungsgemäßen Formmassen einen möglichst hohen Füllungsgrad an versinterbarem Pulver enthalten. Für die Herstellung einer konzentrierten Suspension kann man auf bekannte Verfahren zurückgreifen. Im kleinen Maßstab hat sich die Behandlung der Suspension mit Ultraschallwellen als schnelle und problemlose Methode bewährt. Das Lösungsmittel und Tensid werden in einem Glaskolben vorgelegt. Der Kolben ist in ein Ultraschallbad eingetaucht. Das Pulver wird portionsweise zugeführt, bis ein hoher Gehalt an Pulver bei ausreichender Fließfähigkeit erreicht ist. Durch die Beschallung erwärmt sich die Suspension üblicherweise auf 50 - 60°C und bleibt fließfähig.

Anwendungsnäher ist die Vermahlung z.B. in einer Rührwerkskugelmühle; üblicherweise führt diese Dispergierbehandlung zu höheren Dichten des gesinterten Formkörpers. Dazu wird ein Überschuß an Lösungsmittel zugegeben, um die Viskosität herabzusetzen und die Vermahlung zu ermöglichen. Der Überschuß muß nach der Vermahlung wieder durch Destillation entfernt werden. Als Alternative bietet sich die vollständige Trocknung der gemahlenen Suspension in z.B. einem Sprüh- oder Schaufeltrockner an. Das erhaltene, mit Tensid beschichtete Pulver wird dann portionsweise in einem thermostatisierten, evakuierten Rühraggregat, z.B. in einem Kneter, mit der gewünschten Menge Lösungsmittel versetzt, wenn nötig, aufgeheizt und gemischt. Das Knetprodukt kann direkt verwendet werden, oder durch Abkühlung in einen zähen oder festen Zustand überführt werden. Die Masse kann zerkleinert oder durch langsames Rotieren der Knetelemente im gekühlten Kneter granuliert werden.

Die Formgebung kann direkt mit der durch Temperaturerhöhung verflüssigten Suspension betrieben werden, indem die Suspension in eine gekühlte Form gegossen wird. Produktionsnaher ist die Verarbeitung in einer Spritzgußmaschine. Das im Kneter hergestellte Granulat wird in einem auf Temperaturen oberhalb der Verfestigungstemperatur der Formmasse, z.B. in einem auf 20 bis 60°C beheizten Zylinder plastifiziert und bei relativ niedrigem Druck (1 - 200 bar) in eine gekühlte Form eingespritzt. Im Prinzip gibt es keine untere Grenze für die Formtemperatur, und es ist lediglich eine Temperatur unterhalb der Verfestigungstemperatur der Formmasse erforderlich. Aus praktischen Gründen (Aneisung, Kondensierung usw.) ist jedoch eine Formtemperatur über 5°C erwünscht. Bei optimaler Wahl der Verfahrensparameter (Dispergatormenge, Dispergatortyp, Lösungsmittel, Füllgrad der Suspension, Zylinder- und Formtemperatur, Kühlzeit) ist das Formteil der Form ohne Schwierigkeiten zu entnehmen.

Aus dem so hergestellten Formkörper wird zunächst das Lösungsmittel, zweckmäßig durch Trocknen bei vermindertem Druck bei Temperaturen unterhalb der Verfestigungstemperatur der Formmasse entfernt. Wenn ein Teil (20 - 30 %) des Lösungsmittels entfernt ist, kann, wenn erwünscht, die Temperatur gesteigert werden, denn mit abnehmendem Lösungsmittelgehalt ist die Verfestigung nicht mehr reversibel. In der Praxis hat sich ein Vakuum von 1 mbar als ausreichend erwiesen. Im kleinem Maßstab kann die Vakuumtrocknung bei Raumtemperatur in einem normalen Vakuumtrockenschrank durchgeführt werden; für niedrige Temperaturen wurde ein doppelwandiges Glasgefäß mit einem Kryostaten thermostatisiert und evakuiert. Die Trockenzeit liegt üblicherweise zwischen 0,5 und 4 Stunden.

Das zurückbleibende Tensid kann in einem Vakuumtrockenschrank bei 150 bis 400°C entfernt werden; eine pyrolytische Entfernung in Stickstoff oder Luft bei 250 - 600°C ist eine andere Möglichkeit.

Der resultierende Weißkörper kann bei den für das jeweilige Pulver üblichen Temperaturen in den üblichen Atmosphären gesintert werden.

Die Verarbeitung der erfindungsgemäßen Formmassen kombiniert die Vorteile von Schlickerguß und Spritzguß auf bisher nicht bekannte Weise. Eine homogene, gut dispergierte, hochgefüllte, sehr fließfähige Suspension wird bei sehr milder Verarbeitungstemperatur in eine etwa 30 bis 50°C kühlere Form eingespritzt und verfestigt. Das relativ kurze Temperaturgefälle der Verfestigung gestattet eine gute Formfüllung und eine Oberflächenanpassung der Suspension an die der Form, welches in Formteilen mit einer hervorragenden Oberflächenqualität resultiert. Nach der Verfestigung läßt sich das Lösungsmittel schnell und ohne Rißbildung auch aus dicken Formteilen entfernen. Dadurch, daß die Verdampfung des Lösungsmittels unterhalb der Verfestigungstemperatur durchgeführt wird, ist gewährleistet, daß ein Verzug nicht aufritt. Das zurückbleibende Tensid kann ebenfalls problemlos ausgetrieben werden, und das Formteil erlangt mit der Sinterbehandlung seine endgültige Gestalt.

### Beispiel 1

35 g n-Octan wurden mit 7,9 g eines ethoxylierten C₁₆-C₁₈-Fettalkoholgemisches mit einem durchschnittlichen Ethoxylierungsgrad von 11 in einem Kolben vorgelegt. Unter ständiger Beschallung in einem Ultraschallbad wurden portionsweise 278 g Al₂O₃-Pulver mit einer mittleren Korngröße von 0,5 µm zugegeben, so daß eine dünnflüssige, warme Suspension (50°C) erhalten wurde. Die Suspension hat eine Verfestigungstemperatur von 15°C (Gehalt an Lösungsmittel 10,9 Gew.-%, Tensid 2,4 Gew.-% und versinterbarem Pulver 86,6 Gew.-%). Die Suspension wurde in ein mit Polytetrafluorethylen beschichtetes, in zwei Hälften teilbares Becherglas eingegossen und innerhalb einer Stunde auf 6°C abgekühlt. Das entstandene harte und glatte, zylindrische Formteil mit 50 mm Durchmesser und 35 mm Höhe ließ sich leicht aus dem Becherglas entfernen. Es wurde zunächst 2 Stunden lang bei 5°C und dann weitere 2 Stunden lang bei 20°C im Vakuum bei bis auf 1 bar fallendem Druck zwecks Entfernung des Lösungsmittels behandelt. Dabei fand keine Rißbildung statt. Anschließend wurde das Tensid durch Behandeln des Formteiles im Vakuum bei 250°C (2 h) und dann in einem Kammerofen bei 450°C (4 h) ausgebrannt. Das so behandelte Formteil wurde mit einer Aufheizrate von 10°C/min auf 1000°C und dann mit einer Aufheizrate von 2°C/min auf 1650°C erhitzt und dann 4 Stunden lang bei dieser Temperatur belassen. Das erhaltene Formteil war rißfrei und hatte eine Dichte von 3,60 g/cm³.

### Beispiel 2

38 g n-Octan wurden mit 10,6 g eines gesättigten ethoxylierten C₁₃-C₁₅-Oxoalkoholgemisches mit durchschnittlichem Ethoxylierungsgrad von 3 in einem Kolben vorgelegt und unter ständiger Beschallung in einem Ultraschallbad portionsweise mit 266 g ZrO₂-Pulver, das mit 2 Gew.-% Y₂O₃ stabilisiert war und eine mittlere Korngröße von 0,2 µm aufwies, versetzt. Die entstandene, dünnflüssige, 50°C warme Suspension (Gehalt an Lösungsmittel 12,0 Gew.-%, Tensid 3,3 Gew.-% und versinterbarem Pulver 84,6 Gew.-%) mit einer Verfestigungstemperatur von -12°C, wurde wie in Beispiel 1 beschrieben, in ein Becherglas gegossen und innerhalb einer Stunde auf -20°C abgekühlt. Das dem Becherglas entnommene zylindrische Formteil von 50 mm Durchmesser und 35 mm Höhe wurde dann jeweils 1 Stunde lang im Vakuum bei bis auf 1 mbar fallendem Druck bei -15°C, -10°C, -5°C und 20°C getrocknet. Anschließend wurde das Tensid, wie in Beispiel 1 beschrieben, ausgebrannt. Der erhaltene Formkörper wurde mit einer Aufheizrate von 10°C/min auf 1000°C und dann mit einer Aufheizrate von 2°C/min bis 1500°C erwärmt und 4 Stunden lang bei dieser Temperatur belassen. Der erhaltene, rißfreie Sinterkörper hatte eine Dichte von 5,66 g/cm³.

### Beispiel 3

16,5 g n-Hexan wurden, wie in Beispiel 1 beschrieben, mit 6,8 g eines ethoxylierten linearen C₁₆-C₁₈-Fettalkoholgemisches mit durchschnittlichem Ethoxylierungsgrad 11 und 340 g eines Eisenpulvers mit einer mittleren Korngröße von 4,1 µm versetzt und die in ein Becherglas gegossene, 50°C warme Suspension (Verfestigungstemperatur 12°C, (Gehalt an Lösungsmittel 4,5 Gew.-%, Tensid 1,9 Gew.-% und versinterbarem Pulver 93,6 Gew.-%) innerhalb von 30 Minuten auf 3°C abgekühlt. Das verfestigte Formteil wurde dem Becherglas entnommen und, wie in Beispiel 1 beschrieben, getrocknet. Anschließend wurde das Formteil in einem Rohrofen in wasserstoffhaltiger Atmosphäre mit einer Aufheizrate von 20°C/min auf 300°C gebracht und eine halbe Stunde bei dieser Temperatur zwecks Entfernung des Tensids belassen. Dann wurde mit einer Aufheizgeschwindigkeit von 100°C/min auf 1200°C geheizt und eine Stunde lang bei dieser Temperatur gehalten. Der erhaltene, rißfreie Sinterkörper hatte eine Dichte von 7,01 g/cm³.

### Beispiel 4

Beispiel 3 wurde wiederholt, mit dem Unterschied, daß anstelle von n-Hexan 19,5 g Cyclohexan verwendet wurde. Die Verfestigungstemperatur der Suspension betrug 7°C (Gehalt der Suspension an Lösungsmittel 5,3 Gew.-%, an Tensid 1,9 Gew.-% und versinterbarem Pulver 92,8 Gew.-%).

### Beispiel 5

21,4 g Isobuttersäureisobutylester wurden mit 6,8 g eines ethoxylierten primären C₁₈-Fettamins mit insgesamt 40 Ethylenoxideinheiten und 340 g Eisenpulver mit einer mittleren Korngröße von 4,1 µm zu einer Suspension mit einer Verfestigungstemperatur von 6°C verarbeitet (Gehalt der Suspension an Lösungsmittel 5,8 Gew.-%, an Tensid 1,8 Gew.-% und versinterbarem Pulver 92,3 Gew.-%). Die 50°C warme Suspension wurde in einem Becherglas auf -20°C abgekühlt und das entnommene Formteil wurde, wie in Beispiel 2 beschrieben, getrocknet. Anschließend wurde das Formteil wie in Beispiel 3 beschrieben, vom Tensid befreit und zu einem Sinterkörper verarbeitet.

### Beispiel 6

28 g n-Octan wurden mit 7,7 g eines ethoxylierten C₁₆-C₁₈-Fettalkoholgemisches mit einem durchschnittlichem Ethoxylierungsgrad von 11 und 193 g einer sinterfähigen Si₃N₄-Pulvermischung, wie in Beispiel 1 beschrieben, versetzt. Die Pulvermischung bestand zu 92 Gew.-% aus Si₃N₄-Pulver mit einer mittleren Korngröße von 0,7 µm, zu 6 Gew.-% aus Y₂O₃-Pulver mit einer mittleren Korngröße von 0,4 µm und zu 2 Gew.-% aus Al₂O₃-Pulver mit einer mittleren Korngröße von 0,5 µm. Die Suspension mit einer Verfestigungstemperatur von 15°C (Gehalt der Suspension an Lösungsmittel 12,2 Gew.-%, an Tensid 3,3 Gew.-% und versinterbarem Pulver 84,8 Gew.-%) wurde, wie in Beispiel 1 beschrieben, zu einem Formkörper verarbeitet, getrocknet und vom Tensid befreit. Anschließend wurde das Formteil in einem Gasdrucksinterofen im Vakuum mit einer Aufheizrate von 10°C/min auf 1500°C gebracht und dann bei einem Stickstoffdruck von 10 bar und einer Aufheizrate von 3°C/min bis 1850°C erhitzt und eine halbe Stunde bei dieser Temperatur belassen. Dann wurde der Gasdruck auf 100 bar erhöht und weitere 30 Minuten bei 1850°C druckgesintert. Der erhaltene rißfreie Sinterkörper hatte eine Dichte von 3,14 g/cm³.

### Beispiel 7

28 g n-Octan wurden mit 9,6 g eines ethoxylierten, einfach ungesättigten C₁₈-Fettalkohols mit durchschnittlichem Ethoxylierungsgrad 10 und 240 g Al₂O₃-Pulver mit einer Korngröße von 0,5 µm zu einer Suspension mit einer Verfestigungstemperatur von 0°C (Gehalt der Suspension an Lösungsmittel 10,1 Gew.-%, an Tensid 3,4 Gew.-% und versinterbarem Pulver 86,5 Gew.-%) verarbeitet. Die 50°C warme Suspension wurde in einem Becherglas durch Abkühlen auf -20°C verfestigt und der Formkörper wie in Beispiel 2 getrocknet, und wie in Beispiel 1 vom Tensid befreit und zu einem Sinterkörper verarbeitet.

### Beispiel 8

28 g n-Octan wurden mit 9,6 g eines ethoxylierten C₁₂-C₁₄-Fettalkoholgemisches mit durchschnittlichem Ethoxylierungsgrad 5 und 240 g eines Al₂O₃-Pulvers mit einer mittleren Korngröße von 0,5 µm zu einer Suspension mit einer Verfestigungstemperatur von -10°C verarbeitet (Gehalt der Suspension an Lösungsmittel 10,1 Gew.-%, an Tensid 3,4 Gew.-% und versinterbarem Pulver 86,5 Gew.-%). Die 50°C warme Suspension wurde in einem Becherglas auf -20°C abgekühlt und der entnommene Formkörper wie in Beispiel 7 beschrieben zu einem rißfreien Sinterkörper verarbeitet.

### Beispiel 9

35 g n-Octan wurden mit 7,9 g eines ethoxylierten C₁₂-C₁₄-Fettalkoholgemisches mit einem durchschnittlichem Ethoxylierungsgrad von 10 und endständiger Acetoxygruppe und 240 g Al₂O₃-Pulver mit einer mittleren Korngröße von 0,5 µm zu einer Suspension mit einer Verfestigungstemperatur von -10°C verarbeitet (Gehalt der Suspension an Lösungsmittel 12,4 Gew.-%, an Tensid 2,8 Gew.-% und an versinterbarem Pulver 84,8 Gew.-%). Die 50°C warme Suspension wurde, wie in Beispiel 7 beschrieben, zu einem rißfreien Sinterkörper verarbeitet.

### Beispiel 10

28 g n-Octan wurden mit 9,6 g einer 70 Gew.-% Lösung in Wasser von einem ethoxylierten C₁₂-C₁₄-Fettalkoholpolyethylenglykolethersulfats mit einem durchschnittlichen Ethoxylierungsgrad von 2 und 240 g Al₂O₃-Pulvers mit einer mittleren Korngröße von 0,5 µm zu einer Suspension mit einer Verfestigungstemperatur von -15°C verarbeitet (Gehalt der Suspension an Lösungsmittel 12,4 Gew.-%, an Tensid 3,4 Gew.-% und an versinterbarem Pulver 86,5 Gew.-%). Die 50°C warme Suspension wurde, wie in Beispiel 7 beschrieben, zu einem rißfreien Sinterkörper verarbeitet.

### Beispiel 11

28 g n-Octan wurden mit 9,6 g eines ethoxylierten C₁₂-C₁₄-Fettalkoholpolyethylenglykoletherphosphats mit einem durchschnittlichem Ethoxylierungsgrad von 5 und 240 g Al₂O₃-Pulvers mit einer mittleren Korngröße von 0,5 µm zu einer Suspension mit einer Verfestigungstemperatur von -12°C verarbeitet (Gehalt der Suspension an Lösungsmittel 12,4 Gew.-%, an Tensid 3,4 Gew.-% und an versinterbarem Pulver 86,5 Gew.-%). Die 50°C warme Suspension wurde wie in Beispiel 7 beschrieben, zu einem rißfreien Sinterkörper verarbeitet.

### Beispiel 12

28,8 g Diisopropylether wurden mit 9,6 g eines ethoxylierten linearen C₁₆-C₁₈-Fettalkohols mit durchschnittlichem Ethoxylierungsgrad 11 und 240 g Al₂O₃-Pulvers mit einer Korngröße von 0,5 µm zu einer Suspension mit einer Verfestigungstemperatur von 0°C verarbeitet (Gehalt der Suspension an Lösungsmittel 10,3 Gew.-%, an Tensid 3,4 Gew.-% und an versinterbarem Pulver 86,2 Gew.-%). Die 50°C warme Suspension wurde in einem Becherglas durch Abkühlen auf -20°C verfestigt und, wie in Beispiel 7 beschrieben, zu einem Sinterkörper verarbeitet.

### Beispiel 13

34,2 g Isobuttersäureisobutylester wurden mit 9,6 g eines ethoxylierten linearen C₁₆-C₁₈-Fettalkohols mit einem durchschnittlichem Ethoxylierungsgrad von 11 und 240 g Al₂O₃-Pulver mit einer Korngröße von 0,5 µm zu einer Suspension mit einer Verfestigungstemperatur von 2°C verarbeitet (Gehalt der Suspension an Lösungsmittel 10,3 Gew.-%, an Tensid 3,4 Gew.-% und an versinterbarem Pulver 84,5 Gew.-%). Die 50°C warme Suspension wurde in einem Becherglas durch Abkühlen auf -20°C verfestigt und das Formteil wurde dann jeweils 2 Stunden lang im Vakuum bei bis auf 1 mbar fallenden Druck bei 0°C, 5°C, 10°C und 20°C (Gehalt der Suspension an Lösungsmittel 10,3 Gew.-%, an Tensid 3,4 Gew.-% und an versinterbarem Pulver 84,5 Gew.-%) getrocknet. Anschließend wurde das Tensid, wie in Beispiel 1 beschrieben, ausgebrannt. Der erhaltene Formkörper wurde wie in Beispiel 1 zu einem Sinterformteil verarbeitet.

### Beispiel 14

31 g (2,2,4)-Trimethylpentan wurden mit 8,7 g eines ethoxylierten linearen C₁₆-C₁₈-Fettalkohols mit einem durchschnittlichem Ethoxylierungsgrad von 11 und 218 g Al₂O₃-Pulver mit einer Korngröße von 0,5 µm zu einer Suspension mit einer Verfestigungstemperatur von 13°C verarbeitet (Gehalt der Suspension an Lösungsmittel 12,0 Gew.-%, an Tensid 3,4 Gew.-% und an versinterbarem Pulver 84,0 Gew.-%). Die 50°C warme Suspension wurde in einem Becherglas durch Abkühlen auf -20°C verfestigt und wie in Beispiel 7 zu einem Sinterkörper verarbeitet.

### Beispiel 15

17,5 g n-Octan wurden mit 6,8 g einer ethoxylierten linearen C₁₈-Säure mit einem durchschnittlichem Ethoxylierungsgrad von 9 und 340 g Eisenpulver mit einer mittleren Korngröße von 4,1 µm zu einer Suspension mit einer Verfestigungstemperatur von 13°C verarbeitet (Gehalt der Suspension an Lösungsmittel 4,8 Gew.-%, an Tensid 1,9 Gew.-% und an versinterbarem Pulver 93,3 Gew.-%). Die 50°C warme Suspension wurde in einem Becherglas durch Abkühlen auf -20°C verfestigt und, wie in Beispiel 3 beschrieben, zu einem Sinterkörper verarbeitet.

### Beispiel 16

20,3 g Diisopropylketon wurden mit 6,8 g eines ethoxylierten Di-C₁₆-C₁₈-Fettamins mit durchschnittlichem Ethoxylierungsgrad von 20 und 340 g Eisenpulver mit einer mittleren Korngröße von 4,1 µm zu einer Suspension mit einer Verfestigungstemperatur von 27°C verarbeitet (Gehalt der Suspension an Lösungsmittel 5,5 Gew.-%, an Tensid 1,9 Gew.-% und an versinterbarem Pulver 92,6 Gew.-%). Die 50°C warme Suspension wurde in einem Becherglas auf -20°C abgekühlt und das entnommene Formteil wurde wie in Beispiel 2 beschrieben getrocknet. Anschließend wurde das Formteil wie in Beispiel 3 beschrieben, vom Tensid befreit und zu einem Sinterkörper verarbeitet.

### Beispiel 17

28 g n-Octan wurden mit 9,6 g eines ethoxylierten C₂₂-Fettalkohols mit einem durchschnittlichem Ethoxylierungsgrad von 11 und 240 g eines Al₂O₃-Pulvers mit einer mittleren Korngröße von 0,5 µm zu einer Suspension mit einer Verfestigungstemperatur von 26°C verarbeitet (Gehalt der Suspension an Lösungsmittel 10,1 Gew.-%, an Tensid 3,4 Gew.-% und an versinterbarem Pulver 86,5 Gew.-%). Die 50°C warme Suspension wurde in einem Becherglas auf 3°C abgekühlt und verfestigt. Anschließend wurde das Formteil, wie in Beispiel 1 beschrieben, zu einem Sinterkörper verarbeitet.

### Beispiel 18

28 g n-Octan wurden mit 9,6 g eines C₂₂-Fettalkohols mit 5 Propylenoxid- und 5 Ethylenoxid-Einheiten als Polyetherblöcke und 240 g eines Al₂O₃-Pulvers mit einer mittleren Korngröße von 0,5 µm zu einer Suspension mit einer Verfestigungstemperatur von 18°C verarbeitet (Gehalt der Suspension an Lösungsmittel 10,1 Gew.-%, an Tensid 3,4 Gew.-% und an versinterbarem Pulver 86,5 Gew.-%). Die 50°C warme Suspension wurde in einem Becherglas auf 3°C abgekühlt und verfestigt. Anschließend wurde das Formteil, wie in Beispiel 1 beschrieben, zu einem Sinterkörper verarbeitet.

### Beispiel 19

31,5 g n-octan wurden mit 8,7 g eines ethoxylierten Hydroxibuttersäureamids, erhalten aus der Umsetzung von einem Di-C₁₆-C₁₈-Fettamin mit Butyrolacton und anschließender Ethoxylierung mit 25 Ethylenoxideinheiten und 198 g eines Al₂O₃-Pulvers mit einer mittleren Korngröße von 0,5 µm zu einer Suspension mit einer Verfestigungstemperatur von 21°C verarbeitet (Gehalt der Suspension an Lösungsmittel 13,2 Gew.-%, an Tensid 3,7 Gew.-% und an versinterbarem Pulver 83,1 Gew.-%). Die 50°C warme Suspension wurde in einem Becherglas auf 3°C abgekühlt und verfestigt. Anschließend wurde das Formteil, wie in Beispiel 1 beschrieben, zu einem Sinterkörper verarbeitet.

### Beispiel 20

1046 g Si₃N₄-Pulver mit einer mittleren Korngröße von 0,7 µm, 56,4 g Y₂O₃-Pulver mit einer mittleren Korngröße von 0,4 µm und 22,4 g Al₂O₃-Pulver mit einer mittleren Korngröße von 0,5 µm wurden mit 45,2 g eines ethoxylierten linearen C₁₆-C₁₈-Fettalkohols mit durchschnittlichem Ethoxylierungsgrad von 18 und 969 g n-Octan versetzt und in einer Rührwerkskugelmühle bei 3000 U/min und 50°C 1 h lang gemahlen. Die Suspension wurde an einem Rotationsverdampfer bei 110°C und 10 mbar bis zur Trockene eingedampft.

1079 g des Trockengutes wurden mit 154 g n-Octan in einem auf 40°C beheizten Laborkneter in 2 h zu einer homogenen, cremigen Suspension (Gehalt der Suspension an Lösungsmittel 12,5 Gew.-%, an Tensid 3,4 Gew.-% und an versinterbarem Pulver 84,1 Gew.-%) geknetet. Durch Abkühlen auf 25°C wurde die Masse zu einem rieselfähigen Granulat verarbeitet. Das Granulat wurde in einer Schneckenspritzgußmaschine mit einem auf 10°C gekühlten Einzug und einer auf 50°C beheizten Düse verarbeitet. Die Plastifizierung konnte ohne externe Wärmezuführung vollzogen werden. Die plastifizierte, auf 50°C aufgewärmte Masse wurde bei einem Spritzdruck von 40 bar in einer auf 15°C gekühlten polierten Metallform innerhalb 1 min zu Scheiben mit einem Durchmesser 80 mm und Dicke 4 mm verarbeitet. Die Scheiben wurden, wie in Beispiel 6 beschrieben, zu einem Sinterformkörper verarbeitet. Die Dichte der rissefreien Scheibe war 3,25 g/cm³.

## Patentansprüche

1. Versinterbare Pulver enthaltende vergießbare Formmasse, dadurch gekennzeichnet, daß sie, bezogen auf die Gesamtmasse
a) 60 bis 97 Gew.-% versinterbare Pulver,
b) 0,1 bis 10 Gew.-% von durch Alkoxylierung von aliphatischen Alkoholen, Fettsäuren, Fettsäureamiden oder aliphatischen Aminen erhältliche Tenside der allgemeinen Formeln 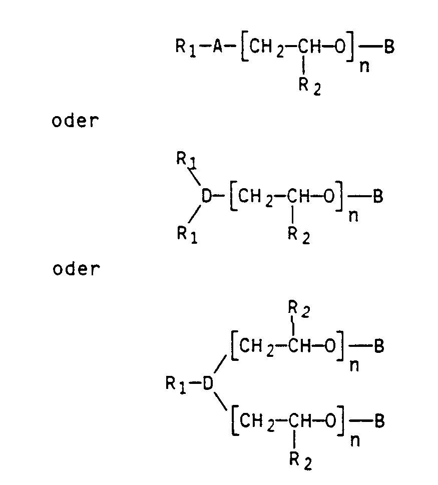 in denen R₁ ein aliphatischer Kohlenwasserstoffrest mit 10 bis 40 C-Atomen,
A die Gruppierung
-O- oder 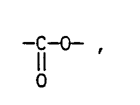 R₂, -H, -CH₃ und/oder -CH₂·CH₃,
B die Gruppierung
-HSO₃ , -H₂PO₄ , 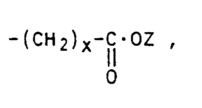 -(CH₂)ₓ-NH₂ , -NH-(CH₂)ₓ-NH₂ oder 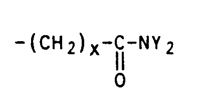 in der Z für Wasserstoff, Alkalimetall oder Ammonium,
X für eine ganze Zahl von 1 bis 3 und Y für H oder -CH₃ steht,
D die Gruppierung
>N- oder 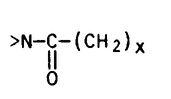 in der x ebenfalls die obige Bedeutung hat und
n eine ganze Zahl von 1 bis 40 ist, bedeutet, und
c) 2 bis 35 Gew.-% eines organischen Lösungsmittels mit einem Schmelzpunkt < 10°C und einem Siedepunkt von 40 bis 180°C, ausgewählt aus der Gruppe der Alkane, Ether, Ester und Ketone,
enthält.

2. Vergießbare Formmasse nach Anspruch 1, dadurch gekennzeichnet, daß das versinterbare Pulver eine Korngröße von 0, 1 bis 50 µm aufweist.

3. Vergießbare Formmasse nach Ansprüchen 1 bis 2, dadurch gekennzeichnet, daß das versinterbare Pulver ein oxidisches Keramikpulver, ein nicht oxidisches Keramikpulver und/oder ein Metallpulver ist.

4. Vergießbare Formmasse nach Ansprüchen 1 bis 3, dadurch gekennzeichnet, daß das Tensid ein alkoxylierter Alkohol mit 16 bis 22 C-Atomen ist.

5. Vergießbare Formmasse nach Anspruch 4, dadurch gekennzeichnet, daß der Alkohol ethoxyliert ist.

6. Verfahren zur Herstellung eines Sinterkörpers unter Verwendung einer Formmasse nach einem der vorhergehenden Ansprüche, dadurch gekennzeichnet, daß man die Formmasse oberhalb ihrer Verfestigungstemperatur verformt, anschließend auf Temperaturen unterhalb ihrer Verfestigungstemperatur abkühlt, und aus dem erhaltenen Formkörper vor der Versinterung das Lösungsmittel und das Tensid entfernt.

7. Verfahren nach Anspruch 6, dadurch gekennzeichnet, daß man das Lösungsmittel zumindest teilweise bei Temperaturen unterhalb der Verfestigungstemperatur entfernt.

8. Verfahren nach Ansprüchen 6 und 7, dadurch gekennzeichnet, daß man das Tensid bei 150 bis 600°C entfernt.

## Claims

1. A pourable molding compound containing sinterable powders, which comprises, based on the total compound,
a) from 60 to 97% by weight of sinterable powders,
b) from 0.1 to 10% by weight of surfactants, obtainable by alkoxylation of aliphatic alcohols, fatty acids, fatty acid amides or aliphatic amines, of the general formula 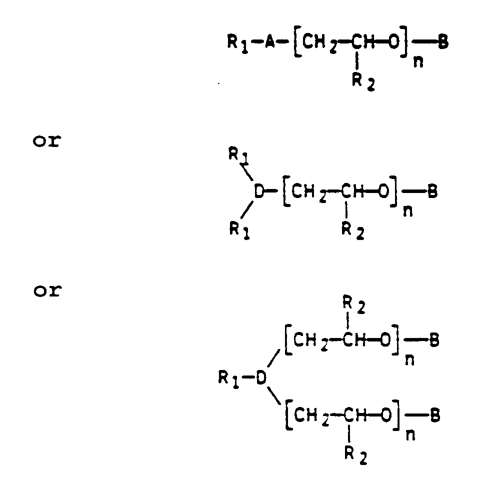 where R₁ is an aliphatic hydrocarbon radical having from 10 to 40 carbon atoms,
A is -O- or 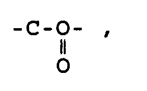 R₂ is -H, -CH₃ and/or -CH₂·CH₃,
B is -HSO₃, -H₂PO₄, 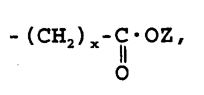 -(CH₂)ₓ-NH₂, -NH-(CH₂)ₓ-NH₂ or 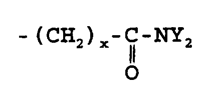 where Z is hydrogen, an alkali metal or ammonium,
x is an integer from 1 to 3, and Y is H or -CH₃,
D is >N- or 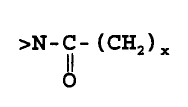 where x is also as defined above, and
n is an integer from 1 to 40, and
c) from 2 to 35% by weight of an organic solvent having a melting point < 10°C and a boiling point of from 40 to 180°C, selected from the group comprising the alkanes, ethers, esters and ketones.

2. A pourable molding compound as claimed in claim 1, wherein the sinterable powder has a particle size of from 0.1 to 50 µm.

3. A pourable molding compound as claimed in claim 1 or 2, wherein the sinterable powder is an oxidic ceramic powder, a nonoxidic ceramic powder and/or a metal powder.

4. A pourable molding compound as claimed in claim 1 or 2 or 3, wherein the surfactant is an alkoxylated alcohol having from 16 to 22 carbon atoms.

5. A pourable molding compound as claimed in claim 4, wherein the alcohol is ethoxylated.

6. A process for the production of a sintered article using a molding compound as claimed in any one of the preceding claims, which comprises molding the compound at above its solidification temperature and subsequently cooling it to below its solidification temperature, and removing the solvent and the surfactant from the resultant molding before sintering.

7. A process as claimed in claim 6, wherein the solvent is removed, at least in part, at below the solidification temperature.

8. A process as claimed in claim 6 or 7, wherein the surfactant is removed at from 150 to 600°C.

## Revendications

1. Masse à mouler coulable contenant une poudre frittable, caractérisée en ce qu'elle contient, rapporté à la masse totale :
a) de 60 à 97 % en poids de poudre frittable,
b) de 0,1 à 10 % en poids de tensioactifs obtenus par alcoxylation d'alcools aliphatiques, d'acides gras, d'amides d'acides gras ou d'amines aliphatiques, de formules générales: 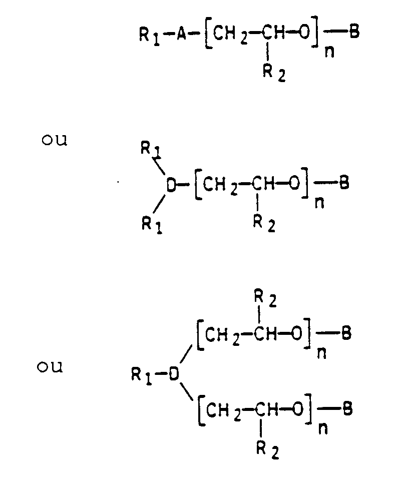 dans lesquelles R₁ est un résidu hydrocarboné aliphatique avec 10 à 40 atomes de C,
A est le groupement
-O- ou 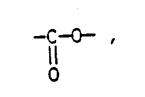 R₂ est -H,-CH₃ et/ou -CH₂.CH₃
B est le groupement
-HSO₃ , -H₂PO₄ , 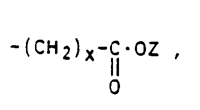 -(CH₂)ₓ-NH₂ , -NH-(CH₂)ₓ-NH₂ ou 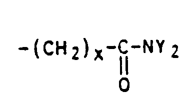 où Z représente l'hydrogène, un métal alcalin ou l'ammonium, X représente un nombre entier de 1 à 3 et Y représente H ou -CH₃,
D est le groupement
>N- ou 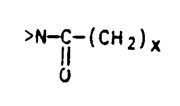 dans lequel x a également la signification ci-dessus et n est un nombre entier de 1 à 40, et
c) 2 à 35% d'un solvant organique avec un point de fusion <10°C et un point d'ébullition de 40 à 180°C choisi dans le groupe des alcanes, éthers, esters et cétones.

2. Masse à mouler coulable selon la revendication 1, caractérisée en ce que la poudre frittable présente une taille de grains de 0,1 à 50 µm.

3. Masse à mouler coulable selon les revendications 1 à 2, caractérisée en ce que la poudre frittable est une poudre de céramique oxydée, une poudre de céramique non oxydée et/ou une poudre métallique.

4. Masse à mouler coulable selon les revendications 1 à 3, caractérisée en ce que le tensioactif est un alcool alcoxylé avec 16 à 22 atomes de C.

5. Masse à mouler coulable selon la revendication 4, caractérisée en ce que l'alcool est éthoxylé.

6. Procédé de fabrication d'un corps fritté en utilisant une masse à mouler selon l'une des revendications précédentes, caractérisé en ce qu'on moule la masse à mouler au-dessus de sa température de consolidation, on la refroidit ensuite à des températures au-dessous de sa température de consolidation, et on élimine le tensioactif et le solvant du corps moulé avant le frittage.

7. Procédé selon la revendication 6, caractérisé en ce qu'on élimine le solvant au moins en partie à des températures au-dessous de la température de consolidation.

8. Procédé selon les revendications 6 et 7, caractérisé en ce qu'on élimine le tensioactif entre 150° et 600°C.
